# EUROPEAN PATENT APPLICATION

(11) **EP 4 693 089 A1**
(43) Date of publication of application: **11.02.2026**
(21) Application number: 24935526.4
(22) Date of filing: 29.05.2024
(51) Int. Cl.: G06F 30/20, G06F 30/18, G06F 30/15, G06T 17/00

(54) **TOPOLOGICAL OPTIMIZATION METHOD, APPARATUS AND DEVICE FOR COIL MOUNTING SEAT**

(30) Priority: 16.04.2024 CN 202410457987
(71) Applicant: CRRC Changchun Railway Vehicles Co., Ltd., Changchun, Jilin 130000 (CN)
(72) Inventor: SHAO, Qing, Changchun, Jilin 130000 (CN); LI, Kai, Changchun, Jilin 130000 (CN); LIU, Shuai, Changchun, Jilin 130000 (CN); LIU, Hongtao, Changchun, Jilin 130000 (CN)
(74) Representative: Lorenz Seidler Gossel Part. mbB
(86) International application number: PCT/CN2024/096048
(87) International publication number: WO 2025/217991

(57) **Abstract**

A topological optimization method, apparatus and device for a coil mounting seat. The method comprises: marking a single-side U-shaped track area of a high-temperature superconducting electrodynamic suspension Maglev train as an initial design domain; performing calculation to obtain a main transmission interface position and range of an electromagnetic force in the initial design domain during static suspension, and recording same as a first area; performing calculation to obtain a main transmission interface position and range of an electromagnetic force in the initial design domain during electrodynamic suspension, and recording same as a second area; under a target working condition, calculating an electromagnetic force between a static suspension coil, an excitation coil, and a superconducting magnet during the static suspension, and applying the calculation result to the first area; calculating an electromagnetic force between a traction coil, a figure-8 coil, and a superconducting magnet during the electrodynamic suspension, and applying the calculation result to the second area; and using a topological optimization model to optimize the initial design domain, and using the optimization result as a target coil mounting seat.

## Description

### FIELD

This application claims the priority to Chinese Patent Application No. CN202410457987.3, titled "TOPOLOGICAL OPTIMIZATION METHOD, APPARATUS, AND DEVICE FOR COIL MOUNTING SEAT", filed on April 16, 2024 with the China National Intellectual Property Administration, which is incorporated herein by reference in its entirety.

### BACKGROUND

High-temperature superconducting electrodynamic suspension refers to a novel vehicle integrating high-temperature superconducting technology with magnetic suspension technology. The vehicle introduces a large current and generates a strong magnetic field based on a zero-resistance property of high-temperature superconducting materials, and a contactless transportation manner supported, guided, and propelled by magnetic forces is achieved through interaction between an on-vehicle superconducting magnet and a magnetic field of a ground coil.

During operation of a train, a strong magnetic field generated by a superconducting magnet is in opposite direction to the magnetic field of the ground coil, generating a repulsive force between the two magnetic fields. When the repulsive force is greater than a weight of the train, the train is suspended. Therefore, for superconducting electrodynamic suspension, relative motion between the superconducting magnet provided in the train and passive coils provided in a U-shaped track is used to generate a suspension force that lifts a train body. A strong repulsive force generated between a superconductor and a guide rail enables electrodynamic suspension operation of the train.

When the train moves downward, a distance between the superconducting magnet and a suspension coil decreases and a current flowing through them increases, leading to an increase in the suspension force, enabling the train to automatically return to an original suspension position. The distance is related to a velocity of the train. Generally, the train body can be suspended only when the velocity is equal to or greater than 100km/h. A matching relationship among a suspension gap, a guidance gap, and an electromagnetic force for superconducting electrodynamic suspension at different velocities is to be studied. For this study, a reduced-scale or full-scale test line for high-velocity applications takes up a large space and requires high investment. To address the above issue, a static suspension coil and a vibration excitation coil are to be provided on both sides of the track. By analyzing a current which flows through a zero-flux coil at varying velocities and applying the current reversely, an electrodynamic suspension train can be statically suspended at a fixed position, facilitating study on the matching relationship among the suspension gap, the guidance gap, and the electromagnetic force.

A mounting seat of the described maglev train requires to simultaneously meet installation and load-bearing requirements for the suspension coil and the vibration excitation coil in static suspension, as well as installation and load-bearing requirements for a traction coil and a zero-flux figure-8 coil in dynamic suspension. No optimization solution for such a mounting seat exists in the related technology.

### SUMMARY

In view of this, a method, an apparatus and a device for topology optimization of a coil mounting seat are provided according to embodiments of the present disclosure, to provide an optimization solution for a coil mounting seat.

To this end, technical solutions are provided according to the embodiments of the present disclosure as follows.

A method for topology optimization of a coil mounting seat includes:
acquiring a one-side U-shaped track region of a high-temperature superconducting electrodynamic suspension train and determining the one-side U-shaped track region as an initial design region;
calculating, during static suspension, a primary transmission interface position and a range of an electromagnetic force in the initial design region based on a vertical displacement between centerlines of a static suspension coil or a vibration excitation coil and a superconducting magnet, a height of the centerline of the superconducting magnet, outer contour dimensions of the static suspension coil, and outer contour dimensions of the vibration excitation coil in the initial design region, and determining a first region;
calculating, during electrodynamic suspension of the high-temperature superconducting electrodynamic suspension train, a primary transmission interface position and a range of the electromagnetic force in the initial design region based on a position difference of centerlines of a traction coil and a figure-8 coil with respect to the centerline of the superconducting magnet in the initial design region, and determining a second region;
calculating, in a target operating condition, an electromagnetic force among the static suspension coil, the vibration excitation coil, and the superconducting magnet during static suspension to obtain a first maximum value and a first direction of the electromagnetic force, and applying the electromagnetic force corresponding to the first maximum value and the first direction to the first region;
calculating, in the target operating condition, an electromagnetic force among the traction coil, the figure-8 coil, and the superconducting magnet during electrodynamic suspension to obtain a second maximum value and a second direction of the electromagnetic force, and applying the electromagnetic force corresponding to the second maximum value and the second direction to the second region; and
optimizing the initial design region obtained after the electromagnetic forces are applied to the first region and the second region by using a topology optimization model, and determining the optimized initial design region as a target coil mounting seat, where a design variable of the topology optimization model is a density of units in the optimized initial design region, and an objective value of the topology optimization model is a minimum resultant compliance, constraints of the topology optimization model include a volume fraction being less than a preset value and a maximum Mises stress being not greater than a target threshold.

In an embodiment, in the method for topology optimization of a coil mounting seat, after the optimizing the initial design region obtained after the electromagnetic forces are applied to the first region and the second region by using a topology optimization model, the method further includes:
smoothing the target coil mounting seat; and
applying the target operating condition to the smoothed target coil mounting seat under each of a static suspension condition and an electrodynamic suspension condition, and checking the smoothed target coil mounting seat to determine whether the maximum Mises stress of the target coil mounting seat is greater than the target threshold and determine whether maximum deformation of the target coil mounting seat is greater than a preset deformation limit.

In an embodiment, in the method for topology optimization of a coil mounting seat, the target threshold is N% of a yield limit of a material for manufacturing the target coil mounting seat, N ranges from 80 to 100 inclusively, and the preset deformation limit ranges from 0 to 1mm inclusively.

In an embodiment, in the method for topology optimization of a coil mounting seat, a value of N is 85, and a value of the preset deformation limit is 0.5mm.

In an embodiment, in the method for topology optimization of a coil mounting seat, in response to the maximum Mises stress of the target coil mounting seat being greater than the target threshold or the maximum deformation of the target coil mounting seat being greater than the preset deformation limit, the method further includes: optimizing the initial design region by using the topology optimization model, where the initial design region is obtained after the primary transmission interface positions and the ranges for static suspension and electrodynamic suspension are corrected.

In an embodiment, in the method for topology optimization of a coil mounting seat, in response to the maximum Mises stress of the target coil mounting seat being greater than the target threshold or the maximum deformation of the target coil mounting seat being greater than the preset deformation limit, the method further includes:
calculating a quantity of optimization processes of the initial design region by using the topology optimization model, where the initial design region is obtained after the primary transmission interface positions and the ranges for static suspension and electrodynamic suspension are corrected; and
determining whether the calculated quantity reaches a target number, and in response to the target number being reached, selecting a secondary material as a material used for the initial design region, resetting the calculated quantity to zero, and optimizing the initial design region by using the topology optimization model, where the initial design region is obtained after the primary transmission interface positions and the ranges for static suspension and electrodynamic suspension are corrected.

In an embodiment, in the method for topology optimization of a coil mounting seat, before acquiring a static suspension load of the high-temperature superconducting electrodynamic suspension train corresponding to the target operating condition, the method further includes:
acquiring a preset operating parameter limit of the high-temperature superconducting electrodynamic suspension train; and
determining an extreme operating condition corresponding to a worst operating state of the high-temperature superconducting electrodynamic suspension train based on the preset operating parameter limit, and determining the extreme operating condition as the target operating condition.

An apparatus for topology optimization of a coil mounting seat includes: an optimization object acquisition unit, a calculation unit, a correction unit, and an optimization unit.

The optimization object acquisition unit is configured to acquire a one-side U-shaped track region of a high-temperature superconducting electrodynamic suspension train and determine the one-side U-shaped track region as an initial design region.

The calculation unit is configured to calculate, during static suspension, a primary transmission interface position and a range of an electromagnetic force in the initial design region based on a vertical displacement between centerlines of a static suspension coil or a vibration excitation coil and a superconducting magnet, a height of the centerline of the superconducting magnet, outer contour dimensions of the static suspension coil, and outer contour dimensions of the vibration excitation coil in the initial design region, and determine a first region; and calculate, during electrodynamic suspension of the high-temperature superconducting electrodynamic suspension train, a primary transmission interface position and a range of the electromagnetic force in the initial design region based on a position difference of centerlines of a traction coil and a figure-8 coil with respect to the centerline of the superconducting magnet in the initial design region, and determine a second region.

The correction unit is configured to calculate, in a target operating condition, an electromagnetic force among the static suspension coil, the vibration excitation coil, and the superconducting magnet during static suspension to obtain a first maximum value and a first direction of the electromagnetic force, and apply the electromagnetic force corresponding to the first maximum value and the first direction to the first region; and calculate, in the target operating condition, an electromagnetic force among the traction coil, the figure-8 coil, and the superconducting magnet during electrodynamic suspension to obtain a second maximum value and a second direction of the electromagnetic force, and apply the electromagnetic force corresponding to the second maximum value and the second direction to the second region.

The optimization unit is configured to optimize the initial design region obtained after the electromagnetic forces are applied to the first region and the second region by using a topology optimization model, and determine the optimized initial design region as a target coil mounting seat, where a design variable of the topology optimization model is a density of units in the optimized initial design region, and an objective value of the topology optimization model is a minimum resultant compliance, constraints of the topology optimization model include a volume fraction being less than a preset value and a maximum Mises stress being not greater than a target threshold.

A device for topology optimization of a coil mounting seat includes: a memory and a processor.

The memory is configured to store a program.

The processor is configured to execute the program to perform the method for topology optimization of a coil mounting seat according to any one of the above embodiments.

Based on the above technical solutions according to the embodiments of the present disclosure, a one-side U-shaped track region of a high-temperature superconducting electrodynamic suspension train is determined as an initial design region; during static suspension, a primary transmission interface position and a range of an electromagnetic force in the initial design region is calculated, and a first region is determined; during electrodynamic suspension, a primary transmission interface position and a range of the electromagnetic force in the initial design region is calculated, and a second region is determined; in a target operating condition, an electromagnetic force among a static suspension coil, a vibration excitation coil, and a superconducting magnet during static suspension is calculated to obtain a first maximum value and a first direction of the electromagnetic force, and the electromagnetic force corresponding to the first maximum value and the first direction is applied to the first region; an electromagnetic force among a traction coil, a figure-8 coil, and the superconducting magnet during electrodynamic suspension is calculated to obtain a second maximum value and a second direction of the electromagnetic force, and the electromagnetic force corresponding to the second maximum value and the second direction is applied to the second region; and the initial design region is optimized by using a topology optimization model, and the optimized initial design region is determined as a target coil mounting seat, achieving design optimization of the coil mounting seat.

### BRIEF DESCRIPTION OF THE DRAWINGS

To clearly illustrate technical solutions in embodiments of the present disclosure or in the related technology, the drawings used in description of the embodiments or the conventional technology are briefly described hereinafter. Apparently, the drawings in the following description are only some of the embodiments of the present disclosure, and based on these drawings, other drawings may be obtained by those skilled in the art without creative efforts.
FIG. 1 is a flowchart of a method for topology optimization of a coil mounting seat according to an embodiment of the present disclosure;
FIG. 2 is a schematic structural diagram of an initial design region according to an embodiment of the present disclosure;
FIG. 3 is a schematic structural diagram of an optimized target coil mounting seat according to the present disclosure;
FIG. 4 is a schematic structural diagram of an apparatus for topology optimization of a coil mounting seat according to an embodiment of the present disclosure; and
FIG. 5 is a schematic structural diagram of a device for topology optimization of a coil mounting seat according to an embodiment of the present disclosure.

### DETAILED DESCRIPTION

The technical solutions according to the embodiments of the present disclosure are described clearly and completely as follows in conjunction with the drawings in the embodiments of the present disclosure. Apparently, the described embodiments are only some rather than all of the embodiments of the present disclosure. All other embodiments obtained by those skilled in the art based on the embodiments in the present disclosure without any creative work fall within the protection scope of the present disclosure.

First, professional technical terms used in the present disclosure are explained as follows.

Ultra-low temperature treatment refers to refrigeration by using a liquid nitrogen device at an operating temperature below -180°C, around -200°C.

Strong magnetic field includes an ultra-strong magnetic field and an ultra-high-intensity magnetic field. The ultra-strong magnetic field refers to a magnetic field with a strength greater than 5T (Tesla) generated by using superconducting technology. The ultra-high-intensity magnetic field is generated by using pulsed technology, hybrid magnet technology, or ultra-high-power electromagnet technology.

High Vacuum refers to a vacuum degree below 1.333×10-1 to 1.333×10-6Pa.

Superconducting magnet refers to an electromagnet with a coil made of a type-II superconductor that exhibits a high transition temperature and an exceptionally high critical magnetic field at a low temperature. The superconducting magnet has main features of no electrical losses caused by wire resistance and no magnetic losses caused by an iron core.

Traction force, suspension force, and guiding force each refers to an electromagnetic force generated by repulsion between the superconducting magnet and magnetic fields of a ground traction coil and a figure-8 coil.

Topology optimization refers to a mathematical method for optimizing material distribution within a given area based on given load conditions, constraints, and performance indexes, and belongs to structural optimization.

Static suspension coil refers to a coil used to suspend the superconducting magnet during a static suspension test.

Vibration excitation coil refers to a coil used to simulate an alternating magnetic field during a static suspension test.

Traction coil refers to a coil used to provide a traction force to a superconducting test vehicle during an electrodynamic suspension test.

Figure-8 coil refers to a coil used to provide a suspension force and a guiding force to the superconducting test vehicle during an electrodynamic suspension test.

A method for topology optimization of a coil mounting seat is provided according to the present disclosure, which can simultaneously meet installation and load-bearing requirements of a suspension coil and the vibration excitation coil for static suspension, as well as the installation and load-bearing requirements of the traction coil and a zero-flux figure-8 coil for dynamic suspension. The method fills a design blank for a four-in-one mounting seat, laying a foundation for the engineering application of high-temperature superconducting electrodynamic suspension trains.

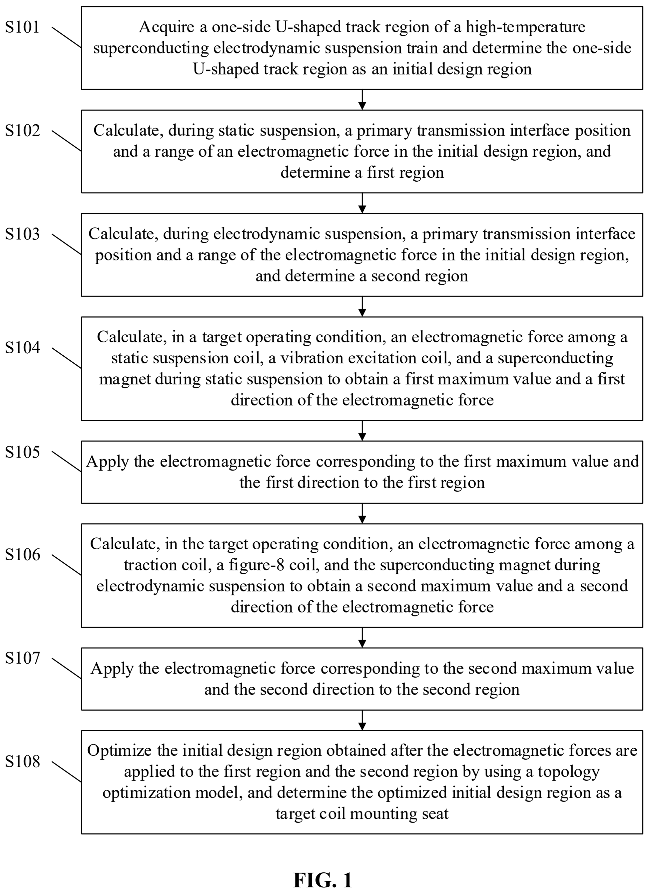

Referring to FIG. 1, a method for topology optimization of a coil mounting seat according to an embodiment of the present disclosure includes steps S101 to S108.

In step S101, a one-side U-shaped track region of a high-temperature superconducting electrodynamic suspension train is acquired and the one-side U-shaped track region is determined as an initial design region.

The one-side U-shaped track region of the high-temperature superconducting electrodynamic suspension train, which is an original topology of a coil mounting seat to be optimized in the present disclosure, is determined as the initial design region in this solution.

In this step, top-level design parameters (existing solution parameters) of a high-temperature superconducting electrodynamic suspension test vehicle are first acquired as follows. For the high-temperature superconducting electrodynamic suspension test vehicle, a height A of a centerline of a superconducting magnet is 550mm (a height from ground to the centerline of the superconducting magnet); outer contour dimensions of each of a static suspension coil and a vibration excitation coil include B which is 780mm (in a vehicle length direction) and C which is 660mm (in a vehicle height direction); a length D of the vehicle is 1600mm; a width E of the vehicle is 1000mm; a vertical displacement F is 100mm; outer contour dimensions of a traction coil and a figure-8 coil include G which is 340mm (in the vehicle length direction) and H which is 330mm (in the vehicle height direction). Based on these top-level design parameters, a rectangular region of the initial design region (that is, the one-side U-shaped track region) is determined as: 2D mm in the vehicle length direction, 1/3E mm in the vehicle width direction, and 2A mm in the vehicle height direction.

In step S102, during static suspension, a primary transmission interface position and a range of an electromagnetic force in the initial design region are calculated, and a first region is determined.

After the initial design region is determined, a vertical displacement between centerlines of the static suspension coil or the vibration excitation coil and the superconducting magnet, a height of the centerline of the superconducting magnet, outer contour dimensions of the static suspension coil, and outer contour dimensions of the vibration excitation coil are calculated based on design parameters of the initial design region.

The vertical displacement between centerlines of the static suspension coil or the vibration excitation coil and the superconducting magnet are described as follows. A function of the static suspension coil is to statically suspend a maglev vehicle by interacting with a superconducting coil in the superconducting magnet of the vehicle body. A function of the vibration excitation coil is to provide electromagnetic vibration excitation to the superconducting coil, to obtain a response of the maglev vehicle under the electromagnetic vibration excitation. Heights of the centerlines of the static suspension coil and the vibration excitation coil are the same, which are both half of a longitudinal length. The centerline of the superconducting coil is also half of a longitudinal length of the superconducting coil. The static suspension coil is required to cooperate with the superconducting coil to suspend the vehicle body. The verticle displacement refers to a height difference between the centerline of the static suspension coil and the centerline of the superconducting coil, which determines whether a sufficiently large electromagnetic force can be generated to suspend the vehicle. In the present design, the verticle displacement may be 100mm or of other values.

The height of the centerline of the superconducting magnet essentially refers to the height from the ground to the centerline of the superconducting magnet. In the present design, the height of the centerline of the superconducting magnet may be 550mm or of other values.

The outer contour dimensions of the static suspension coil and the outer contour dimensions of the vibration excitation coil are determined based on design specifications. For example, in the current design, the outer contour dimensions of each of the static suspension coil and the vibration excitation coil may include 780mm and 660mm.

After the above data are determined, a primary transmission interface position and a range of an electromagnetic force in the initial design region during static suspension are calculated based on the vertical displacement between the centerlines of the static suspension coil or the vibration excitation coil and the superconducting magnet, the height of the centerline of the superconducting magnet, and the outer contour dimensions of the static suspension coil, and the outer contour dimensions of the vibration excitation coil.

In an embodiment, the primary transmission interface position is determined based on several parameters included in the top-level design parameters. These parameters include: the height A of the centerline of the superconducting magnet in the high-temperature superconducting electrodynamic suspension test vehicle, the vertical displacement F between the centerlines of the static suspension coil or the vibration excitation coil and the superconducting magnet, the outer contour dimension C of each of the static suspension coil and the vibration excitation coil in the vehicle height direction, the outer contour dimension B of each of the static suspension coil and the vibration excitation coil in the vehicle length direction, and the width E of the vehicle. In an embodiment, a calibrated result of the primary transmission interface position of the electromagnetic force during static suspension is as follows. In the vehicle height direction, with a track plane as a reference baseline, an upper boundary of the interface position is (A-F)+1/2C, and a lower boundary of the interface position is (A-F)-1/2C. In the vehicle length direction, with a centerline of the vehicle as a reference baseline, an upper boundary of the interface position area is +1/2B, and a lower boundary of the interface position area is -1/2B. In the vehicle width direction, with a design region plane adjacent to the vehicle body as a reference baseline, the interface position ranges from 0 to 1/6E mm. With the above calibrated data, the primary transmission interface position of the electromagnetic force during static suspension can be determined.

A primary transmission range of the electromagnetic force during static suspension is described as follows. The primary transmission range of the electromagnetic force is obtained through electromagnetic force simulation analysis by applying a rated current to a specified coil using the conventional technology. For example, a rated current with a peak value of 7KA is applied to the vibration excitation coil, a rated current with a peak value of 11KA is applied to the static suspension coil, and a rated current with a peak value of 105A is applied to the traction coil and the suspension coil. The primary transmission range of an electromagnetic force corresponding to a coil is obtained through electromagnetic force simulation analysis.

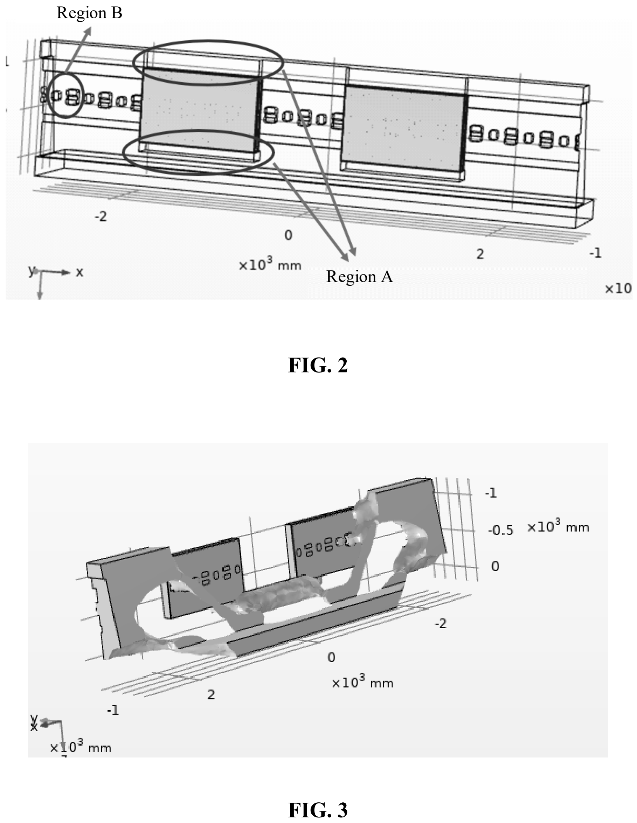

After the primary transmission interface position and the primary transmission range of the electromagnetic force are determined, the first region is determined based on the interface position and the range, for example, a region A as shown in FIG. 2.

In step S103, during electrodynamic suspension, a primary transmission interface position and a range of the electromagnetic force in the initial design region are calculated, and a second region is determined.

In this step, the primary transmission interface position of the electromagnetic force during electrodynamic suspension is determined in a similar way to the primary transmission interface position of the electromagnetic force in step S102. In an embodiment, a calibrated result of the primary transmission interface position of the electromagnetic force in the initial design region during electrodynamic suspension is described as follows.

The interface position is determined based on the initial design parameters. In the vehicle height direction, with the track plane as a reference baseline, an upper boundary of the interface position is (A-F)+1/4H, and a lower boundary of the interface position is (A-F)-1/4H. In the vehicle length direction, with a centerline of the vehicle as a reference baseline, an upper boundary of the interface position is +1/2G, and a lower boundary of the interface position is -1/2G. In the vehicle width direction, with a design region plane adjacent to the vehicle body as a reference baseline, the interface position ranges from 0 to 1/6E mm. H represents the outer contour dimension of each of the traction coil and the figure-8 coil in the vehicle height direction. G represents the outer contour dimension of the traction coil and the figure-8 coil in the vehicle length direction. With the above calibrated data, the primary transmission interface position of the electromagnetic force during electrodynamic suspension can be determined.

In this step, the electromagnetic force primarily refers to a traction force, a suspension force, a guiding force, that is, an electromagnetic force generated by the repulsion between the superconducting magnet and the magnetic field of the ground traction coil and the figure-8 coil. The primary transmission range of the electromagnetic force is also obtained through electromagnetic force simulation analysis by applying a rated current to a specified coil (the superconducting magnet, the ground traction coil, and the figure-8 coil).

After the primary transmission interface position and the primary transmission range of the electromagnetic force are determined, a second region is determined based on the interface position and the range, for example, a region B as shown in FIG. 2.

In step S104, in a target operating condition, an electromagnetic force among the static suspension coil, the vibration excitation coil, and the superconducting magnet during static suspension is calculated to obtain a first maximum value and a first direction of the electromagnetic force.

In this step, the target operating condition is first determined. The target operating condition refers to an operating condition of an electromagnetic force when a worst operating condition is applied to the high-temperature superconducting electrodynamic suspension train. In the operating condition, an electromagnetic force among the static suspension coil, the vibration excitation coil, and the superconducting magnet during static suspension of the train is calculated, to obtain a maximum value and a direction of the electromagnetic force, such as an electromagnetic force of 49.2 KN in a z+ direction, 44KN in a y- direction, 2KN in an x+ direction, and 2KN in an x- direction.

To determine the target operating condition, a preset operating parameter limit of the high-temperature superconducting electrodynamic suspension train is first acquired, and then an extreme operating condition corresponding to a worst operating state of the high-temperature superconducting electrodynamic suspension train is determined based on the preset operating parameter limit. The extreme operating condition is determined as the target operating condition.

In step S105, the electromagnetic force corresponding to the first maximum value and the first direction is applied to the first region.

In this step, the electromagnetic force with the first maximum value and the first direction is applied throughout the first region on finite element calculation software.

In step S106, in the target operating condition, an electromagnetic force among the traction coil, the figure-8 coil, and the superconducting magnet during electrodynamic suspension is calculated, to obtain a second maximum value and a second direction of the electromagnetic force.

The process is identical to the process of step S103.

In step S107, the electromagnetic force corresponding to the second maximum value and the second direction is applied to the second region.

The process is identical to the process of step S104.

In step S108, the initial design region obtained after the electromagnetic forces are applied to the first region and the second region is optimized by using a topology optimization model, and the optimized initial design region is determined as a target coil mounting seat.

A design variable of the topology optimization model is a density of units in the optimized initial design region. An objective value of the topology optimization model is a minimum resultant compliance. Constraints of the topology optimization model include a volume fraction being less than a preset value and a maximum Mises stress being not greater than a target threshold.

In this step, after the electromagnetic force corresponding to the first maximum value and the first direction is applied to the first region in the initial design region and the electromagnetic force corresponding to the second maximum value and the second direction is applied to the second region in the initial design region, the initial design region is optimized by using the topology optimization model. To optimize the initial design region, a Young's modulus of the units in the design region is multiplied by a preset penalty function. A design variable of the topology optimization model is a density of units in the initial design region, an objective value of the topology optimization model is a minimum resultant compliance, and constraints of the topology optimization model include a volume fraction being less than a preset value and a maximum Mises stress being not greater than a target threshold. The compliance of the initial design region is related to the density of the units in the initial design region, and variations in the density of all units in the initial design region influence the compliance of the initial design region. By performing grid partitioning on the initial design region, thousands of small units of the design region are obtained. Each unit has material properties including a unit density. During optimization, whether the density of each unit is 0 or 1 is determined by using an optimization model. Units with a density of 1 are retained, while optimized units with a density of 0 are removed. Thus, an optimal material distribution is obtained. In the solution, by using the topology optimization model to adjust the density of units in the initial design region, a minimum compliance of the initial design region can be obtained while meeting the constraints which include the volume fraction being less than a preset value and the maximum Mises stress being not greater than a target threshold. The optimized initial design region serves as a design target, that is, the target coil mounting seat as shown in FIG. 3. Therefore, the method for designing the coil mounting seat according to the present disclosure can simultaneously meet the installation and load-bearing requirements for the suspension coil and the vibration excitation coil in static suspension, as well as the installation and load-bearing requirements for the traction coil and the zero-flux figure-8 coil in dynamic suspension, filling a design blank for a four-in-one mounting seat, and laying a foundation for the engineering application of high-temperature superconducting electrodynamic suspension trains.

In the solution, the topology optimization model is a pre-established mathematical model. By solving the mathematical model, a material distribution of the coil mounting seat that contributes most to bearing the electromagnetic force. With this model, a topology of a design space of the coil mounting seat is optimized to achieve an optimal design solution for the coil mounting seat. This optimization algorithm can help engineers to reduce material consumption and cost as much as possible on the premise of ensuring product performance and quality. A generation process of the model includes: establishing a mathematical model. The mathematic model typically includes a design space, an objective function, and constraints. Designers configure the design space, the objective function and the constraints based on a design requirement and a design form for the coil mounting seat. The design space refers to a set of all possible design solutions. During topology optimization, the design space is typically defined as a three-dimensional grid model. Each grid unit in the three-dimensional grid model represents a design variable, and these grid units are assigned as an entity or void. The objective function refers to a performance metric that is required to be minimized or maximized. During the topology optimization, the objective function is typically defined as metrics such as material consumption or structural mass. In this solution, the objective function is to obtain a minimum compliance. The constraints refer to limiting conditions to be met, such as a stress, a displacement, and a self-weight. In the solution, the constraints include the volume fraction being less than the preset value and the maximum Mises stress being not greater than the target threshold. Once the mathematical model is established, an optimal solution for the design target is calculated by using the optimization algorithm. In conventional solutions, the optimal solution is typically calculated by using an iteration method, and an optimal variable of the design target is updated during each iteration.

Furthermore, after the target coil mounting seat is obtained by using the topology optimization model, validation is performed on the target coil mounting seat again. In an embodiment, as shown in FIG. 2, a validation process includes: smoothing the target coil mounting seat; and applying the target operating condition to the smoothed target coil mounting seat under each of a static suspension condition and an electrodynamic suspension condition, to determine whether a maximum Mises stress of the target coil mounting seat to which the target operating condition is applied is greater than the target threshold and determine whether maximum deformation of the target coil mounting seat is greater than a preset deformation limit. In response to the maximum Mises stress being greater than the target threshold and the maximum deformation being greater than the preset deformation limit, it indicates that the target coil mounting seat fails to meet the design requirement, and step S108 is to be performed again. The initial design region obtained after the primary transmission interface position and the range of the electromagnetic force are corrected is optimized by using the topology optimization model, until a target coil mounting seat meeting the requirement is obtained. In response to the maximum Mises stress being not greater than the target threshold and the maximum deformation being not greater than the preset deformation limit, it indicates that the target coil mounting seat meets the design requirement, and the target coil mounting seat can be outputted.

In this embodiment, when the maximum Mises stress of the coil mounting seat is greater than the target threshold, or the maximum deformation of the coil mounting seat is greater than the preset deformation limit, a quantity of optimization processes of the initial design region by using the topology optimization model is calculated (the quantity is incremented by one each time the target coil mounting seat is obtained), and whether the calculated quantity reaches a target number is determined. In response to the target number being reached, it indicates that a material of the model is disqualified, a secondary material is selected as the material for manufacturing the initial design region, the calculated quantity is reset to zero, and the initial design region obtained after the primary transmission interface position and the range of the electromagnetic force are corrected is optimized by using the topology optimization model until the smoothed target coil mounting seat is validated to be qualified.

In the embodiment, the target threshold is N% of a yield limit of a material for manufacturing the coil mounting seat. N ranges from 80 to 100 inclusively, for example, N may be 85. The preset deformation limit ranges from 0 to 1mm inclusively, for example, the preset deformation limit may be 0.5mm.

It can be seen from the above solutions that the technical solution disclosed in the present disclosure is as follows. First, a one-side U-shaped track region of a high-temperature superconducting electrodynamic suspension train is determined as an initial design region. Second, a primary transmission interface position and a range of an electromagnetic force during static suspension are determined based on a vertical displacement between centerlines of a static suspension coil or a vibration excitation coil and a superconducting magnet, a height of the centerline of the superconducting magnet of the high-temperature superconducting electrodynamic suspension test vehicle, outer contour dimensions of the static suspension coil, and outer contour dimensions of the vibration excitation coil. Based on a position difference of centerlines of a traction coil and a figure-8 coil with respect to the centerline of the superconducting magnet during electrodynamic suspension, a primary transmission interface position and a range of a traction electromagnetic force, a suspension electromagnetic force, and a guiding electromagnetic force during electrodynamic suspension process are determined. Then, a target operating condition is determined, an electromagnetic force among the static suspension coil, the vibration excitation coil, and the superconducting magnet during static suspension is calculated, a maximum value and a direction of the electromagnetic force in the target operating condition are determined based on the calculated electromagnetic force, and the electromagnetic force with a maximum value and a direction is applied to the above primary transmission interface position and the range of the electromagnetic force during static suspension. Based on a calculated electromagnetic force among the traction coil, the figure-8 coil, and the superconducting magnet during electrodynamic suspension, a maximum value and a direction of the electromagnetic force in the target operating condition are determined, and the electromagnetic force with a maximum value and a direction is applied to the above primary transmission interface position and the range of the electromagnetic forces during electrodynamic suspension. Then, a topology optimization model is established. A density of units in the initial design region obtained after the above process is determined as a design variable. The Young's modulus of the units in the initial design region is multiplied by a penalty function. An optimization objective is set as a minimum resultant compliance. Constraints include a volume fraction being less than 20% to prevent an eddy current effect on a large plane, and a maximum Mises stress being not greater than 85% of the yield limit of the material. Topology optimization is performed to obtain an initial design region with light weight, high strength, and high stiffness, as a structure of a target coil mounting seat. Finally, the target coil mounting seat is smoothed, and validation is performed by applying a target operating condition to the above structure. In response to the maximum Mises stress being not greater than 85% of the yield limit of the material and the maximum deformation being not greater than 0.5mm, a design requirement is met. When the design requirement is not met, iterative optimization is performed again, to enable the target coil mounting seat designed according to the present disclosure to simultaneously meet the installation and load-bearing requirements for the suspension coil and the vibration excitation coil in static suspension, as well as the installation and load-bearing requirements for the traction coil and the zero-flux figure-8 coil in dynamic suspension.

An apparatus for topology optimization of a coil mounting seat is provided in the embodiment. Specific operation details of each unit in the apparatus may be referred to the content of the above method embodiments.

The apparatus for topology optimization of the coil mounting seat according to the embodiment of the present disclosure is described as follows. The apparatus for topology optimization of the coil mounting seat described below and the method for topology optimization of the coil mounting seat described above may be referred to each other.

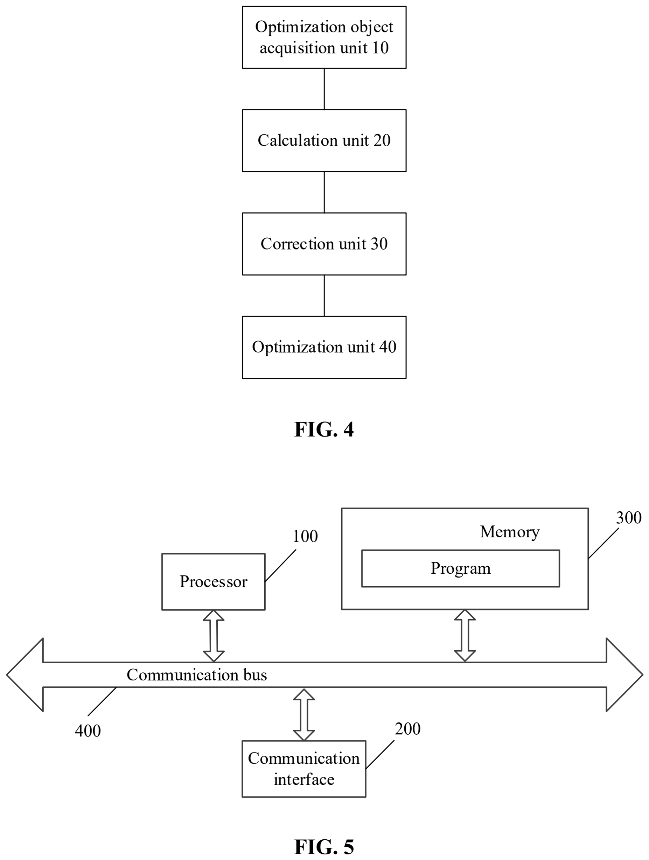

Referring to FIG. 4, the apparatus for topology optimization of the coil mounting seat includes an optimization object acquisition unit 10, a calculation unit 20, a correction unit 30, and an optimization unit 40.

The optimization object acquisition unit 10 is configured to acquire a one-side U-shaped track region of a high-temperature superconducting electrodynamic suspension train, and determine the one-side U-shaped track region as an initial design region.

The calculation unit 20 is configured to calculate, during static suspension, a primary transmission interface position and a range of an electromagnetic force in the initial design region based on a vertical displacement between centerlines of a static suspension coil or a vibration excitation coil and a superconducting magnet, a height of the centerline of the superconducting magnet, outer contour dimensions of the static suspension coil, and outer contour dimensions of the vibration excitation coil in the initial design region, and determine a first region; and calculate, during electrodynamic suspension of the high-temperature superconducting electrodynamic suspension train, a primary transmission interface position and a range of the electromagnetic force in the initial design region based on a relative position of centerlines of a traction coil and a figure-8 coil with respect to the centerline of the superconducting magnet in the initial design region, and determine a second region.

The correction unit 30 is configured to calculate, in a target operating condition, an electromagnetic force among the static suspension coil, the vibration excitation coil, and the superconducting magnet during static suspension to obtain a first maximum value and a first direction of the electromagnetic force, and apply the electromagnetic force corresponding to the first maximum value and the first direction to the first region; and calculate, in the target operating condition, an electromagnetic force among the traction coil, the figure-8 coil, and the superconducting magnet during electrodynamic suspension to obtain a second maximum value and a second direction of the electromagnetic force, and apply the electromagnetic force corresponding to the second maximum value and the second direction to the second region.

The optimization unit 40 is configured to optimize the initial design region obtained after the electromagnetic forces are applied to the first region and the second region by using a topology optimization model, and determine the optimized initial design region as a target coil mounting seat, where a design variable of the topology optimization model is a density of units in the optimized initial design region, and an objective value of the topology optimization model is a minimum resultant compliance, constraints of the topology optimization model include a volume fraction being less than a preset value and a maximum Mises stress being not greater than a target threshold.

FIG. 5 is a hardware structure diagram of a device for topology optimization of a coil mounting seat according to an embodiment of the present disclosure. Referring to FIG. 5, the device includes: at least one processor 100, at least one communication interface 200, at least one memory 300, and at least one communication bus 400.

In the embodiments of the present disclosure, a quantity of each of the processor 100, the communication interface 200, the memory 300 and the communication bus 400 is at least one. In addition, the processor 100, the communication interface 200, and the memory 300 communicate with each other through the communication bus 400. Apparently, communication connections among the processor 100, the communication interface 200, the memory 300, and the communication bus 400 shown in FIG. 5 are optional.

In an embodiment, the communication interface 200 may be an interface of a communication module, for example, an interface of a GSM module.

The processor 100 may be a central processing unit CPU, or an application specific integrated circuit (ASIC), or one or more integrated circuits configured to implement embodiments of the present disclosure.

The memory 300 may include a high-speed RAM memory, and may also include a non-volatile memory, such as at least one disk memory.

The processor 100 is further configured to: acquire a one-side U-shaped track region of a high-temperature superconducting electrodynamic suspension train and determine the one-side U-shaped track region as an initial design region; calculate, during static suspension, a primary transmission interface position and a range of an electromagnetic force in the initial design region based on a vertical displacement between centerlines of a static suspension coil or a vibration excitation coil and a superconducting magnet, a height of the centerline of the superconducting magnet, outer contour dimensions of the static suspension coil, and outer contour dimensions of the vibration excitation coil in the initial design region, and determine a first region; calculate, during electrodynamic suspension of the high-temperature superconducting electrodynamic suspension train, a primary transmission interface position and a range of the electromagnetic force in the initial design region based on a position difference of centerlines of a traction coil and a figure-8 coil with respect to the centerline of the superconducting magnet in the initial design region, and determine a second region; calculate, in a target operating condition, an electromagnetic force among the static suspension coil, the vibration excitation coil, and the superconducting magnet during static suspension to obtain a first maximum value and a first direction of the electromagnetic force, and apply the electromagnetic force corresponding to the first maximum value and the first direction to the first region; calculate, in the target operating condition, an electromagnetic force among the traction coil, the figure-8 coil, and the superconducting magnet during electrodynamic suspension to obtain a second maximum value and a second direction of the electromagnetic force, and apply the electromagnetic force corresponding to the second maximum value and the second direction to the second region; and optimize the initial design region obtained after the electromagnetic forces are applied to the first region and the second region by using a topology optimization model, and determine the optimized initial design region as a target coil mounting seat, where a design variable of the topology optimization model is a density of units in the optimized initial design region, and an objective value of the topology optimization model is a minimum resultant compliance, constraints of the topology optimization model include a volume fraction being less than a preset value and a maximum Mises stress being not greater than a target threshold.

The processor is further configured to perform the specific steps disclosed in other method embodiments described above, which are not repeated herein.

For facilitating description, the above system is described by dividing the system into modules by functions. Apparently, the functions of modules may be implemented in the same one or more software and/or hardware in implementing the present disclosure.

The embodiments are described in this specification in a progressive manner. Various embodiments may refer to each other for the same or similar parts, and each embodiment places emphasis on the difference from other embodiments. In particular, the system or system embodiments are basically similar to the method embodiments, and therefore is described relatively briefly. For relevant details, reference can be made to the corresponding description of the method embodiments. The system and system embodiments described above are only schematic, in which the units described as separate components may or may not be physically separated, and the components shown as units may or may not be physical units, that is, the components may be located in one place or distributed at multiple network units. Some or all modules may be selected according to an actual requirement to achieve an object of a solution of an embodiment. Those skilled in the art may understand and implement the solution without any creative effort.

Those skilled in the art may further appreciate that the units and algorithmic steps in the examples described according to the embodiments disclosed herein may be implemented in forms of electronic hardware, computer software or a combination of the both. To illustrate the interchangeability of the hardware and the software clearly, the components and the steps in the examples are described generally according to functions in the above description. Whether these functions are performed in hardware or software depends on the specific application and design constraints for the technical solution. Those skilled in the art may implement the described function in various manners for each specific application, however such implementation should not be considered beyond the scope of the present disclosure.

Steps of the method or algorithm described in the embodiments disclosed herein may be directly implemented by hardware, a software module executable by a processor, or a combination thereof. The software module may be located in a Random Access Memory (RAM), an internal memory, a Read Only Memory (ROM), an Electrically Programmable ROM, an Electrically-Erasable Programmable ROM, a register, a hard disk, a removable disk drive, a CD-ROM, or any other storage medium known in the art.

It should be further illustrated that relation terms such as "first" and "second" herein are only used to distinguish one entity or operation from another entity or operation, which does not necessarily require or imply that there is an actual relation or sequence between these entities or operations. Furthermore, terms "include", "comprise" or any other variants thereof refer to non-exclusive inclusion, such that a process, a method, an article or a device including a series of elements includes the elements and other elements that are not explicitly listed, or further includes other inherent elements of the process, method, article or device. In addition, unless expressively limited otherwise, the statement "comprising (including) a(n)..." does not exclude existence of other identical elements in the process, method, article or device.

According to the above description of the disclosed embodiments, those skilled in the art can implement or practice the present disclosure. Various modifications to these embodiments are obvious to those skilled in the art, and the general principles defined herein may be implemented in other embodiments without departing from the spirit or scope of the present disclosure. Therefore, the present disclosure should not be limited to the embodiments disclosed herein, but has the widest scope in accordance to the principles and the novel features disclosed herein.

## Claims

1. A method for topology optimization of a coil mounting seat, comprising:
acquiring a one-side U-shaped track region of a high-temperature superconducting electrodynamic suspension train and determining the one-side U-shaped track region as an initial design region;
calculating, during static suspension, a primary transmission interface position and a range of an electromagnetic force in the initial design region based on a vertical displacement between centerlines of a static suspension coil or a vibration excitation coil and a superconducting magnet, a height of the centerline of the superconducting magnet, outer contour dimensions of the static suspension coil, and outer contour dimensions of the vibration excitation coil in the initial design region, and determining a first region;
calculating, during electrodynamic suspension of the high-temperature superconducting electrodynamic suspension train, a primary transmission interface position and a range of the electromagnetic force in the initial design region based on a position difference of centerlines of a traction coil and a figure-8 coil with respect to the centerline of the superconducting magnet in the initial design region, and determining a second region;
calculating, in a target operating condition, an electromagnetic force among the static suspension coil, the vibration excitation coil, and the superconducting magnet during static suspension to obtain a first maximum value and a first direction of the electromagnetic force, and applying the electromagnetic force corresponding to the first maximum value and the first direction to the first region;
calculating, in the target operating condition, an electromagnetic force among the traction coil, the figure-8 coil, and the superconducting magnet during electrodynamic suspension to obtain a second maximum value and a second direction of the electromagnetic force, and applying the electromagnetic force corresponding to the second maximum value and the second direction to the second region; and
optimizing the initial design region obtained after the electromagnetic forces are applied to the first region and the second region by using a topology optimization model, and determining the optimized initial design region as a target coil mounting seat, wherein a design variable of the topology optimization model is a density of units in the optimized initial design region, and an objective value of the topology optimization model is a minimum resultant compliance, constraints of the topology optimization model comprise a volume fraction being less than a preset value and a maximum Mises stress being not greater than a target threshold.

2. The method for topology optimization of a coil mounting seat according to claim 1, wherein after the optimizing the initial design region obtained after the electromagnetic forces are applied to the first region and the second region by using a topology optimization model, the method further comprises:
smoothing the target coil mounting seat; and
applying the target operating condition to the smoothed target coil mounting seat under each of a static suspension condition and an electrodynamic suspension condition, and checking the smoothed target coil mounting seat to determine whether the maximum Mises stress of the target coil mounting seat is greater than the target threshold and determine whether maximum deformation of the target coil mounting seat is greater than a preset deformation limit.

3. The method for topology optimization of a coil mounting seat according to claim 2, wherein the target threshold is N% of a yield limit of a material for manufacturing the target coil mounting seat, wherein N ranges from 80 to 100 inclusively, and the preset deformation limit ranges from 0 to 1mm inclusively.

4. The method for topology optimization of a coil mounting seat according to claim 3, wherein a value of N is 85, and a value of the preset deformation limit is 0.5mm.

5. The method for topology optimization of a coil mounting seat according to claim 2, wherein in response to the maximum Mises stress of the target coil mounting seat being greater than the target threshold or the maximum deformation of the target coil mounting seat being greater than the preset deformation limit, the method further comprises: optimizing the initial design region by using the topology optimization model, wherein the initial design region is obtained after the primary transmission interface positions and the ranges for static suspension and electrodynamic suspension are corrected.

6. The method for topology optimization of a coil mounting seat according to claim 2, wherein in response to the maximum Mises stress of the target coil mounting seat being greater than the target threshold or the maximum deformation of the target coil mounting seat being greater than the preset deformation limit, the method further comprises:
calculating a quantity of optimization processes of the initial design region by using the topology optimization model, wherein the initial design region is obtained after the primary transmission interface positions and the ranges for static suspension and electrodynamic suspension are corrected; and
determining whether the calculated quantity reaches a target number, and in response to the target number being reached, selecting a secondary material as a material used for the initial design region, resetting the calculated quantity to zero, and optimizing the initial design region by using the topology optimization model, wherein the initial design region is obtained after the primary transmission interface positions and the ranges for static suspension and electrodynamic suspension are corrected.

7. The method for topology optimization of a coil mounting seat according to claim 1, wherein before acquiring a static suspension load of the high-temperature superconducting electrodynamic suspension train corresponding to the target operating condition, the method further comprises:
acquiring a preset operating parameter limit of the high-temperature superconducting electrodynamic suspension train; and
determining an extreme operating condition corresponding to a worst operating state of the high-temperature superconducting electrodynamic suspension train based on the preset operating parameter limit, and determining the extreme operating condition as the target operating condition.

8. An apparatus for topology optimization of a coil mounting seat, comprising:
an optimization object acquisition unit, configured to acquire a one-side U-shaped track region of a high-temperature superconducting electrodynamic suspension train and determine the one-side U-shaped track region as an initial design region;
a calculation unit, configured to calculate, during static suspension, a primary transmission interface position and a range of an electromagnetic force in the initial design region based on a vertical displacement between centerlines of a static suspension coil or a vibration excitation coil and a superconducting magnet, a height of the centerline of the superconducting magnet, outer contour dimensions of the static suspension coil, and outer contour dimensions of the vibration excitation coil in the initial design region, and determine a first region; and calculate, during electrodynamic suspension of the high-temperature superconducting electrodynamic suspension train, a primary transmission interface position and a range of the electromagnetic force in the initial design region based on a relative position of centerlines of a traction coil and a figure-8 coil with respect to the centerline of the superconducting magnet in the initial design region, and determine a second region;
a correction unit, configured to calculate, in a target operating condition, an electromagnetic force among the static suspension coil, the vibration excitation coil, and the superconducting magnet during static suspension to obtain a first maximum value and a first direction of the electromagnetic force, and apply the electromagnetic force corresponding to the first maximum value and the first direction to the first region; and calculate, in the target operating condition, an electromagnetic force among the traction coil, the figure-8 coil, and the superconducting magnet during electrodynamic suspension to obtain a second maximum value and a second direction of the electromagnetic force, and apply the electromagnetic force corresponding to the second maximum value and the second direction to the second region; and
an optimization unit, configured to optimize the initial design region obtained after the electromagnetic forces are applied to the first region and the second region by using a topology optimization model, and determine the optimized initial design region as a target coil mounting seat, wherein a design variable of the topology optimization model is a density of units in the optimized initial design region, and an objective value of the topology optimization model is a minimum resultant compliance, constraints of the topology optimization model comprise a volume fraction being less than a preset value and a maximum Mises stress being not greater than a target threshold.

9. A device for topology optimization of a coil mounting seat, comprising:
a memory; and
a processor, wherein the memory is configured to store a program, and the processor is configured to execute the program to perform the method for topology optimization of a coil mounting seat according to any one of claims 1 to 8.
